Europäisches Patentamt

European Patent Office

Office européen des brevets

(19)

(11) Publication number: 0 360 431
A2

(12) **EUROPEAN PATENT APPLICATION**

(21) Application number: 89308656.1

(51) Int. Cl.5: **A61C 7/00**

(22) Date of filing: 25.08.89

(30) Priority: 07.09.88 US 241193

(43) Date of publication of application:
28.03.90 Bulletin 90/13

(84) Designated Contracting States:
AT BE CH DE ES FR GB GR IT LI LU NL SE

(71) Applicant: ORMCO CORPORATION
1332 South Lone Hill Avenue
Glendora California 91740(US)

(72) Inventor: Wong, Raymond Fones
1616 Chernus Lane
Chino California 91709(US)
Inventor: Kidd, Patrick David
1629 Yorkshire Court
San Dimas California 91773(US)
Inventor: Farzin-Nia Farrokh
141 West Fairview Blvd.
Inglewood California 90302(US)

(74) Representative: Thomson, Roger Bruce et al
POLLAK MERCER & TENCH Eastcheap
House Central Approach
Letchworth Hertfordshire SG6 3DS(GB)

(54) Orthodontic bracket.

(57) An orthodontic bracket (10) has a base portion (12) for attachment to a tooth which is provided with a substantially mono layer of substantially uniform sized particles on a contact surface (18). The particles have a size in the range of 5 to 200 microns. The particles are preferably diffusion bonded by heat to the contact surface.

FIG. 2

EP 0 360 431 A2

## ORTHODONTIC BRACKET

### BACKGROUND OF THE INVENTION

The present invention relates to orthodontic brackets. Orthodontic brackets have generally been made of metal and are typically bonded directly to the teeth of a patient. It has always been important to provide a good bonding between the orthodontic bracket and the tooth. Over the years many improvements have been made to metal brackets and the adhesive used to bond the metal bracket to the teeth. As a result, the bonding of typical prior art metal brackets to the teeth has reached generally acceptable values. Aesthetic brackets have recently become popular. Typically these brackets are made of a ceramic material which is much more difficult to secure directly to the teeth. In order to overcome the difficulty in obtaining a good bond with a bracket made of a single crystal alumina, a method of applying such brackets has been suggested in U.S. patent 4,681,538. However, such a method requires special handling and care to obtain acceptable bonding strength. The provision of undercuts within the base of the bracket has also been suggested. While the provision of such undercuts in the base has provided improved bonding strength, it does not provide the same strength as typical prior art metal brackets. In addition, certain adhesives have been found to detract from the transparent or translucent characteristic of the new aesthetic brackets.

The applicants have invented an improved orthodontic bracket and method of making such a bracket whereby improved bonding strength can be obtained without detracting from the aesthetic qualities of the bracket.

### SUMMARY OF THE INVENTION

In accordance with one aspect of the present invention, there is provided an orthodontic bracket having a base portion for attachment to a tooth, said base portion being made of a ceramic material and having a tooth contact surface, characterised in that a substantially mono layer of particles of substantially uniform size is secured to the tooth contact surface, said particles having a size in the range of 5 to 200 microns.

In accordance with another aspect of the invention there is provided an orthodontic bracket made of a transparent or translucent ceramic material, said bracket having an integrally formed base portion for attachment to a tooth, said base portion having a tooth contact surface, characterised in that a substantially mono layer of particles of substantially uniform size is secured to said tooth contact surface, said particles having a substantially spherical shape and being made of a substantially transparent or translucent material.

In accordance with another aspect of the present invention, there is provided a method of applying a substantially mono layer of particles to the tooth contact surface of an orthodontic bracket comprising the steps of:

a) applying a layer of an adhesive to the contact surface of an orthodontic bracket, said adhesive comprising an organic binder, an activator and a surfactant;

b) applying a mono layer of particles of substantially uniform size to said tooth contact surface; and

c) subjecting said bracket to heat so as to diffusion bond the particles to said tooth contact surface.

In accordance with yet another aspect of the present invention, there is provided an adhesive for application to the contact surface of an orthodontic bracket for use in heat bonding particles thereto. The adhesive comprises a mixture of an organic binder which is substantially tacky at room temperature, an activator and a surfactant.

### DESCRIPTION OF THE DRAWINGS

Figure 1 is a top perspective view of an orthodontic bracket made in accordance with the invention;

Figure 2 is a bottom perspective view of the orthodontic bracket of Figure 1;

Figure 3 is a greatly enlarged partial front elevational view of the bonding base of the bracket of Figure 1;

Figure 4 is a greatly enlarged perspective view of the bonding base of the bracket of Figure 1; and

Figure 5 is a bottom perspective view of another embodiment of a bracket made in accordance with the present invention.

## DETAILED DESCRIPTION

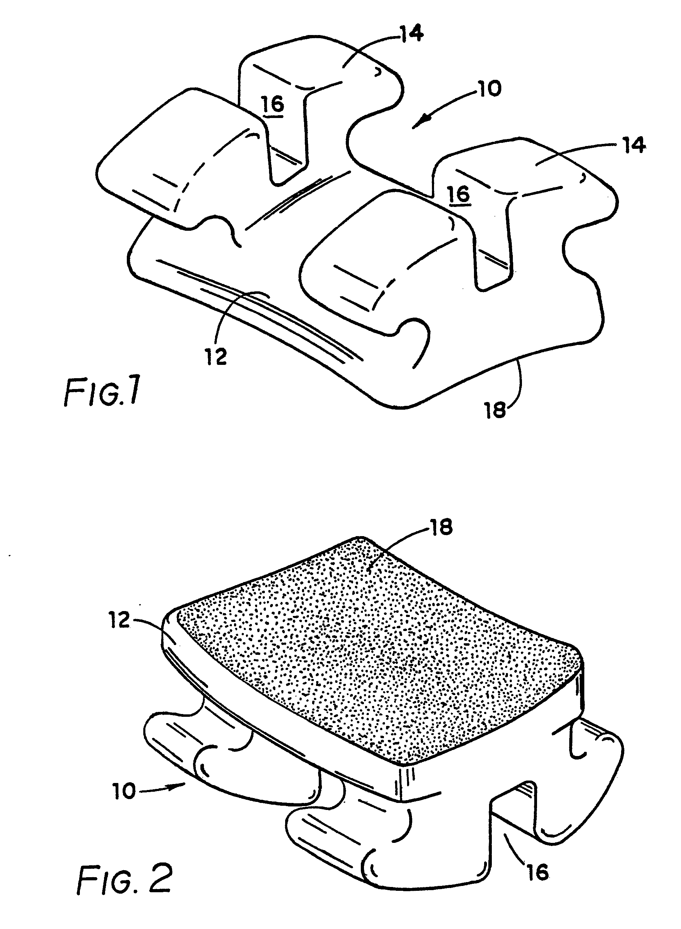

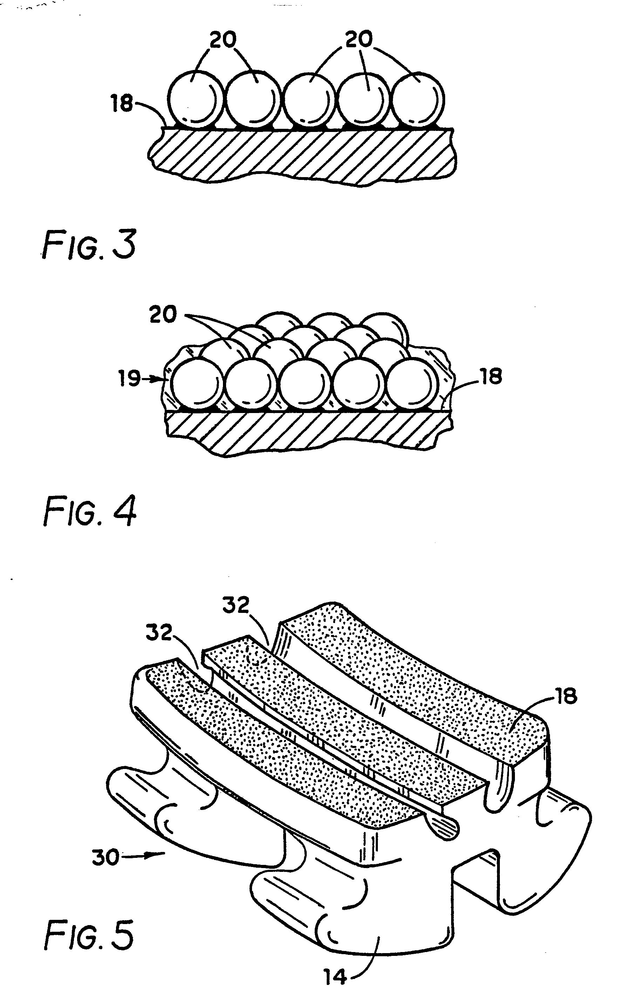

Referring to Figures 1 to 4, there is illustrated an orthodontic bracket 10 made in accordance with the present invention for attachment directly to a tooth of a patient. The orthodontic bracket comprises a base portion 12 and a pair of tie-wings 14 which extend from the base portion 12. The tie-wings 14 are each provided with an elongate slot 16 for receiving an orthodontic archwire (not shown). Preferably, the orthodontic bracket is made of ceramic material that is transparent or translucent. In the particular embodiment illustrated the orthodontic bracket 10 is made of a single crystal alumina material. The base 12 has a tooth contact surface 18 for placement against the surface of a tooth of a patient. Surface 18 is provided with a substantially mono layer 19 of individual particles 20 (as can best be seen in Figures 3 and 4) of substantially uniform size secured thereto and having a size in the range of 5 microns to 200 microns.

Preferably, the particles 20 are substantially spherical in shape as illustrated. In the preferred embodiment illustrated, the particles 20 comprise substantially spherical hollow balls made of zirconium oxide. An example of such may be purchased from Metco under the tradename AE-7078. The particles 20 forming mono layer 19 are of substantially uniform size so that the small particles do not completely fill the voids that exist between adjacent particles 20. Preferably, the size variation of particles 20 in layer 19 is such that the smallest particles 20 are not less than about 75% of the size of the largest particles 20, preferably not less than about 85%. If the size variation is too great, it will cause the particles to be too closely packed and thus detract from the aesthetic qualities of the bracket. A preferred particle size is within the range of 31 to 53 microns. In the particular embodiment illustrated, the size of particles 20 of layer 19 is in the preferred range of about 37 to 44 microns.

In the particular embodiment illustrated in Figures 1 to 4, the surface 18 of base 12 is substantially continuous. However, the present invention is not so limited. Referring to Figure 5, there is illustrated a modified bracket 30 made in accordance with the present invention. The bracket 30 is substantially identical to the bracket 10 of Figures 1 to 4, except that grooves 32 are provided in the surface 18, which may be present in certain brackets for improving adhesion.

While irregular shaped particles may be used to obtain better bonding, they do not provide as aesthetically pleasing an appearance when used on aesthetic brackets, for example brackets made from crystalline alumina.

As previously stated, particles 20 are secured to the contact surface 18 so that they will be permanently attached thereto. In the particular embodiment illustrated, the particles 20 are diffusion bonded (welded) to the contact surface 18. The following table illustrates the improved bond strengths obtained with an orthodontic bracket made of single crystalline alumina having particles 20 applied to surface 18 in accordance with the present invention compared with a single crystalline alumina bracket without particles 20 and compared with a standard orthodontic metal bracket. The prior art and present invention single crystalline alumina brackets were tested with and without grooves provided in surface 18. The crystalline alumina brackets with grooves were similar to that illustrated in Figure 5 and the crystalline alumina brackets without grooves were similar to that illustrated in Figures 1 to 4. The metal bracket and many prior art single crystal alumina grooved brackets were bonded to the tooth using typical prior art adhesives. In the present instance, a two-part dimethacrylate adhesive as sold by Ormco under the tradename "Challenge" was used. A light cure adhesive sold by Scientific Pharmaceuticals was used to bond the crystalline alumina brackets to the teeth.

| | Standard Metal Bracket | Prior Art Single Crystal Alumina Bracket | | Present Invention Single Crystal Alumina Bracket | |
| --- | --- | --- | --- | --- | --- |
| | | with groove | without groove | with groove | without groove |
| Bond Strength | 150kg/cm$^2$ | 75kg/cm$^2$ | 67kg/cm$^2$ | 180kg/cm$^2$ | 207kg/cm$^2$ |

As can be seen from the foregoing table, the standard metal bracket had a bond strength of 150 kg/cm$^2$ and the orthodontic bracket having grooves in the base made of single crystal alumina of the prior art had a bond strength of 75kg/cm$^2$. In comparison, an orthodontic bracket with grooves in the base made of single crystal alumina in accordance with the present invention had a bond strength of 180kg/cm². It can be seen that the single crystal alumina bracket without grooves in the base, but having a mono layer of particles in accordance with the present invention also provided improved results over the typical prior art metal bracket. This shows that it is not necessary to provide grooves to improve bond strength. The bond strengths of brackets made in accordance with the present invention as compared to a prior art single crystal alumina bracket and typical metal brackets are substantially higher.

It is important that the particles 20 adhere securely to the surface 18 of the bracket 10. The applicants have found the following procedure to be quite effective in obtaining a substantially mono layer 19 of particles 20 made of zirconium oxide having a size range from about 37 to 44 microns diffusion bonded to the contact surface 18 of bracket 10 made of single crystal alumina. First, the bracket 10 is inverted so that the contact surface 18 faces upwards. Then, an adhesive is applied to the contact surface 18. This adhesive has a general consistency such that it can be brushed or sprayed on. The adhesive comprises a mixture of an organic binder, an activator and a surfactant. For the purpose of the present invention, an activator is a material used to activate (lower the activation energy) required for diffusion bonding below the melting point of the particles 20 and bracket 10. The organic binder and activator are mixed together, along with a sufficient amount of surfactant so as to permit mixing thereof. In the particular formulation, the organic binder comprised about 72.3% by weight of the mixture, the activator comprised about 24.1% by weight and the surfactant comprised about 3.6% by weight. It is important that a proper mix is obtained so as to provide a substantially uniform mixture wherein the binder and activator are in suspension. Also, it is important that not too much activator is used as this can cause wicking during heating which will result in deformation of the particles and filling of the voids therebetween. The organic binder in the particular embodiment illustrated was purchased from Cotronics, of Brooklyn, NY; the activator used is sold under the tradename CERAMCOAT 512-T by Aremco of Ossining, NY and the surfactant used was purchased from ICI under the tradename SPAN 85. The adhesive mixture is applied to the contact surface 18 either by brushing or spraying. Preferably, the film thickness is between 0.001 and 0.005 inches (0.025 to 0.127 mm). The adhesive mixture is allowed to dry at room temperature for approximately 1 to 5 minutes. The adhesive after drying is still tacky. Thereafter, particles 20 are either sprinkled on to the contact surface 18 or the bracket 10 is turned over and the contact surface 18 is tamped into a pile of particles 20 so that a dense mono layer 19 of particles is achieved. The tacky organic binder allows the spheres to be placed and held in position on the contact surface 18. Thereafter, the bracket is placed in a furnace and preheated to about 120°C in air, and then the furnace is heated to approximately 600°C. Typically, the organic binder will burn off at approximately 600°C. Preferably, the temperature within the furnace is increased at a substantially constant ramp function so as not to disturb the location of the particles 20. Preferably, the rate is no greater than 15°C/min. The typical time taken to heat the particles to 600°C from ambient is approximately 30 to 60 minutes. Thereafter, the orthodontic bracket is heated to a second, higher temperature below the melting temperature of the bracket. In the particular embodiment illustrated, the orthodontic bracket 10, which is made of a single crystal alumina, has a melting temperature in the range of 2050 to 2100°C. The temperature of the furnace is increased to approximately 1600°C. It is important that the furnace temperature is not too high, as this can cause deformation of the particles and filling of the voids therebetween, and that the temperature is not too low, as this can result in insufficient bonding of the particles 20 to the surface 18. A suitable range can easily be obtained by simply taking several samples until acceptable values are obtained. The activator used in the adhesive mixture causes the particles 20 to be diffusion bonded ("welded") to the surface 18 at the contact points at a temperature substantially below its melting point. The orthodontic bracket is maintained at this temperature for a sufficient time period to allow diffusion bonding, typically for about 30 to 60 minutes. Thereafter, the bracket is cooled and removed from the furnace.

The applicants have found that this procedure provides a very high degree of bonding between the particles 20 and the surface 18 of the orthodontic bracket 10 without any substantial distortion of the particles 20. Preferably, the particles 20 are made of a material having a coefficient of expansion which is substantially the same as that of the orthodontic bracket.

An appropriate orthodontic adhesive is then applied to surface 18 and the bracket 10 is secured to the tooth as is customarily done in the prior art. A suitable adhesive that can be used is sold by Ormco under the tradename "Challenge". However, many other suitable adhesives may be used. Because of the improved bonding strengths obtained through the use of the present invention, a wider variety of suitable adhesives will be available for the orthodontist.

## Claims

1. An orthodontic bracket having a base portion (12) for attachment to a tooth, said base portion being made of a ceramic material and having a tooth contact surface (18), characterised in that a substantially mono layer of particles (20) of substantially uniform size is secured to the tooth contact surface (18), said particles having a size in the range of 5 to 200 microns.

2. An orthodontic bracket according to claim 1, characterised in that said particles (20) are hollow and substantially spherical in shape.

3. An orthodontic bracket according to claim 1 or 2, characterised in that said base portion (12) is made of a substantially transparent ceramic material.

4. An orthodontic bracket according to claim 1, 2 or 3, characterised in that the coefficient of expansion of said particles (20) is substantially the same as the coefficient of expansion of said base portion (12).

5. An orthodontic bracket according to any preceding claim, characterised in that the bracket is made of crystalline alumina.

6. An orthodontic bracket according to any preceding claim, characterised in that said particles (20) are made of a crystalline alumina.

7. An orthodontic bracket according to any preceding claim, characterised in that the particle size is in the range of 31 to 53 microns.

8. An orthodontic bracket according to claim 7, characterised in that the particle size is in the range of 37 to 44 microns.

9. An orthodontic bracket according to any of claims 1 to 5, characterised in that said particles (20) are made of zirconium oxide.

10. An orthodontic bracket according to any preceding claim, characterised in that substantially all of said particles (20) are diffusion bonded to said tooth contact surface (18).

11. An orthodontic bracket made of a transparent or translucent ceramic material, said bracket having an integrally formed base portion (12) for attachment to a tooth, said base portion having a tooth contact surface (18), characterised in that a substantially mono layer of particles (20) of substantially uniform size is secured to said tooth contact surface (18), said particles having a substantially spherical shape and being made of a substantially transparent or translucent material.

12. An adhesive for application to the tooth contact surface of an orthodontic bracket for use in heat bonding particles thereto, said adhesive comprising a mixture of an organic binder which is substantially tacky at room temperature, an activator and a surfactant.

13. A method of applying a substantially mono layer of particles (20) to the tooth contact surface (18) of an orthodontic bracket (10) comprising the steps of:

a) applying a layer of an adhesive to the contact surface (18) of an orthodontic bracket, said adhesive comprising an organic binder, an activator and a surfactant;

b) applying a mono layer of particles (20) of substantially uniform size to said tooth contact surface (18); and

c) subjecting said bracket to heat so as to diffusion bond the particles (20) to said tooth contact surface (18).

14. A method according to claim 13, characterised in that said bracket is subjected to a first temperature sufficient to burn out said organic binder and then is subjected to a second, higher temperature whereby said particles (20) are diffusion bonded to said tooth contact surface (18).

15. A method according to claim 14, characterised in that said first temperature is approximately 600° c.

16. A method according to claim 14 or 15, characterised in that said second temperature is approximately 1600° C.

FIG.1

FIG. 2

FIG. 3

FIG. 4

FIG. 5